(19) Europäisches Patentamt

European Patent Office

Office européen des brevets

(11) Publication number: **0 316 199 B1**

(12) **EUROPEAN PATENT SPECIFICATION**

(45) Date of publication of patent specification: **05.08.92**  (51) Int. Cl.⁵: **E04F 13/08**, F16B 13/14

(21) Application number: **88310684.1**

(22) Date of filing: **11.11.88**

(54) **Method & means for fixing building components together.**

(30) Priority: **12.11.87 GB 8726500**
**08.02.88 GB 8802835**

(43) Date of publication of application:
**17.05.89 Bulletin 89/20**

(45) Publication of the grant of the patent:
**05.08.92 Bulletin 92/32**

(84) Designated Contracting States:
**AT BE CH DE ES FR GB GR IT LI LU NL SE**

(56) References cited:
EP-A- 0 014 728          DE-A- 2 556 494
DE-A- 3 150 229          GB-A- 2 115 851
GB-A- 2 137 273          GB-A- 2 145 459
GB-A- 2 152 993          GB-A- 2 183 687

(73) Proprietor: **Payne, David Patrick**
**30 Park Road Berrylands**
**Surbiton Surrey KT5 8OD(GB)**

(72) Inventor: **Payne, David Patrick**
**30 Park Road, Berrylands**
**Surbiton Surrey KT5 8OD(GB)**
Inventor: **Mayal, John Leslie**
**137 Crimicar Lane**
**Sheffield S10 4DF(GB)**

(74) Representative: **Alexander, Thomas Bruce et al**
**Boult, Wade & Tennant 27 Furnival Street**
**London EC4A 1PO(GB)**

Rank Xerox (UK) Business Services

## Description

This invention relates to a method and means for fixing together building components, particularly for fixing facing panels or skins to outer surfaces of building structures. The invention is particularly applicable to existing structures where the original means of fixing have been found to be defective and in need of being replaced or augmented.

The invention is suitable for traditional building but more especially for the system method of building using pre-formed panels of brick or concrete which are or have been fastened together on site.

Various devices have been proposed for fixing together inner and outer components of the buildings but they tend to be ineffective in certain applications for one reason or another because for example they cannot guarantee an adequate bond to each of the two building components.

One known device, as disclosed in British application Serial No. GB-A-2145459, utilises a hollow rod through the centre of which is injected binder into a blind hole in a base component and a through hole in a second component to fix the rod in position. Washers having protrusions locate the rod correctly in the hole. Some of the major disadvantages of this system are that use of a hollow rod automatically weaken the fixing; the binder is injected into the blind hole at a distance from its end which means that it is unlikely that the binder will ever fill the end portion of the blind hole; the washers allow the binder to leak through the air holes into the cavity between the skins which can cause contamination of any insulating or other layer between and be detrimental to its function; the operator has no means of knowing when the hole is full as there is a route for the binder to leak out.

Applicants British pending application Serial No. GB-A-2183687 describes a method of fixing two building components together by injecting a binding material hole through a system of washers around a rod into a blind bore in a base component and a through hole in a second component to fix the rod in position. The washers seal the holes to retain the binder therein.

Although this method is an improvement on GB-A-2145459 it still has a number of disadvantages particularly with the use of low viscosity binding materials which may leak out of the bores via the air holes in the washers during the injecting and setting processes, defeating the advantages of the system. Furthermore the positioning of the washers can be time consuming and awkward.

The object of the present invention is to overcome these disadvantages.

The present invention provides a method of fixing a first building component to a second building component comprising the steps of

a) forming a blind hole in the second component,

b) positioning sealing means on a rod,

c) inserting the rod into the hole,

d) inserting a delivery tube through a port in the sealing means,

e) injecting a binder into the hole around an end portion of the rod to fix the rod in the hole

f) affixing the first building component to the rod

characterised by the steps of rotating at least a pair of movable components forming the sealing means relative to each other to axially align ports formed in each of said components to form a passage for insertion of the delivery tube and, after the binder has been injected, effecting a seal by rotating the components relative to each other to cause the ports to move into disalignment.

Preferably the sealing means comprise at least two components being movable relative to each other being washers, sleeves, or a combination of washers and sleeves.

The present invention also provides a fixing for use in the method of claims 1 to 10 comprising a rod (13) and sealing means which comprise at least a pair of sealing components (20, 22) each having a bore (51, 52) and each component having a port (21, 23), said components being movable relative to each other to cause said ports to become axially aligned to allow passage of a delivery tube (28), in which the sealing components are movable to cause said ports to become disaligned to effect a seal.

The present invention further provides a building structure comprising first and second building components (10, 11) and fixing means connecting the components in which the fixing means comprise a rod (13) located in a blind hole (17) in said second component, sealing means located on the rod comprising a pair of sealing components located on the rod positioned relative to each other to form a seal to retain binder (15) surrounding the rod in the hole securing it to the building components, and the first building component affixed to the rod.

Further features and advantages of the invention will be apparent from the following description, by way of example, of some preferred embodiments of the invention, the description being read with reference to the accompanying drawings in which:-

Figure 1 is a section through part of a building structure showing first and second components secured by a tie in accordance with the present invention;

Figure 2 is a view similar to Figure 1 but showing the first stage of the method of fixing the tie;

Figure 3 is a view similar to Figures 1 and 2 but showing the second stage of the fixing method;

Figure 4 is a perspective view with parts broken away for clarity and showing the same stage as Figure 3;

Figure 5 is a view similar to Figure 1 but showing a modification;

Figure 6 is a section view of an inverted roof fixing according to the invention;

Figure 7 is a plan view of a washer used in the fixing of Figure 1;

Figure 8 is a view similar to Figure 1 in which an alternative method of sealing is used;

Figure 9 is a view similar to Figure 4 in which the alternative method of sealing of Figure 8 is used;

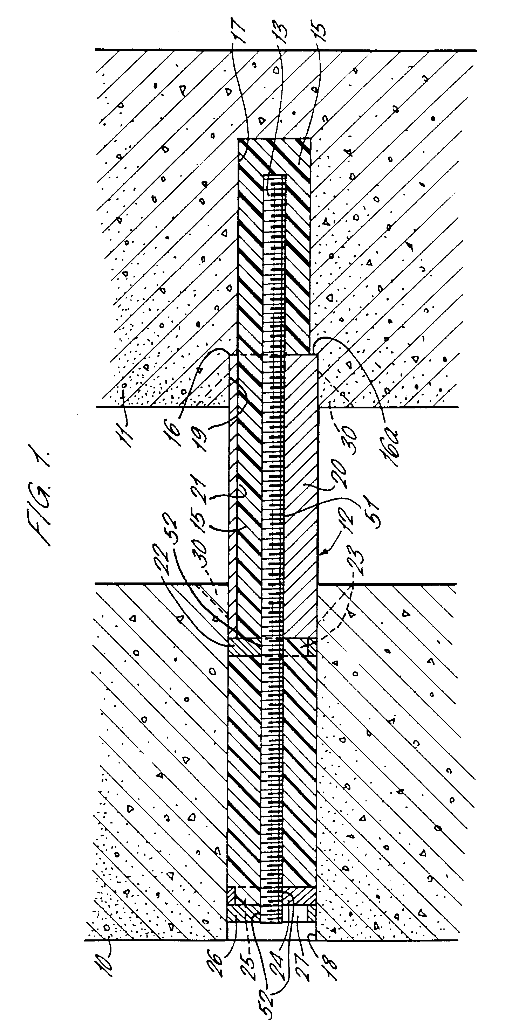

Referring first to Figure 1, there is shown a building structure comprising outer 10 and inner 11 skins. These skins may be inner and outer skins of a cavity wall of the building or the inner skin 11 may be part of a pre-cast concrete structure or other building structure in which case the outer skin 10 may be a cladding or facing panel for the structure. For convenience, the outer and inner skin will hereafter be referred to as first and second building components 10, 11.

The building components are secured together by ties 12, one of which is illustrated in Figure 1. Each tie 12 comprises a threaded rod 13 of stainless steel or other suitable material which is secured in a blind hole 17 in the second building component 11 and in a through-hole 18 in the first building component 10. The rod 13 is secured in the blind hole 17 and through-hole 18 by a resin binder 15 which is preferably a thermosetting resin of known type. This may be an epoxy or other suitable resin, preferably having thixotropic properties.

A sleeve 20 is positioned on the rod 13, as shown in Figure 1, said sleeve 20 being of a length at least 20mm and preferably 30mm greater than the distance between building components 10 and 11. The internal coaxial bore 51 of sleeve 20 is internally threaded to correspond with the thread of the rod 13.

The Sleeve 20 has a port 21 extending axially along its length. The purpose of this will be described shortly.

The sleeve 20 is made from any material suitable for the purpose and may be made from more than one segment whereby the segments interlock in a manner which is leakproof by means of male and female components, one at each end of each segment. Means are also provided such that the segments may be put together to form a required length, wherein the ports in each segment are all aligned to allow passage of the feeder pipe 27.

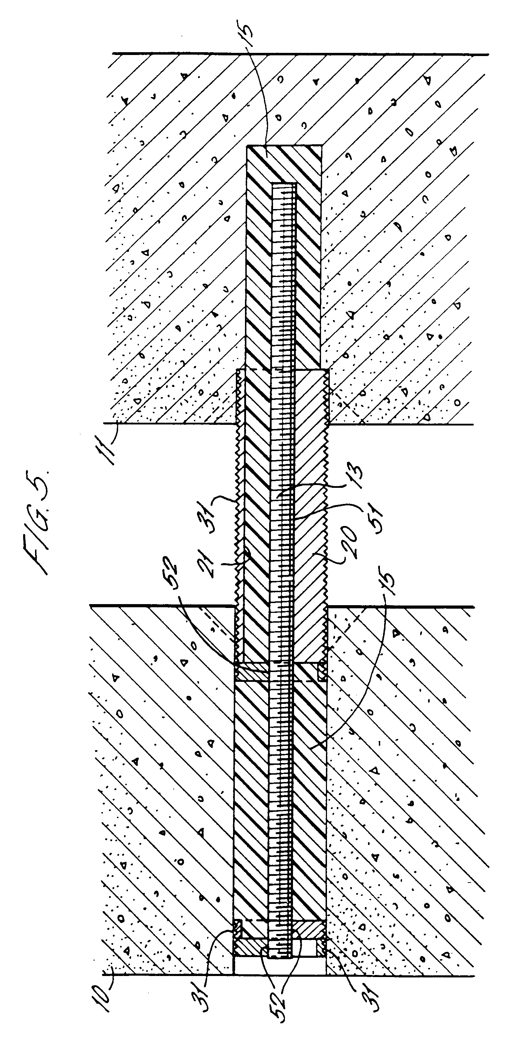

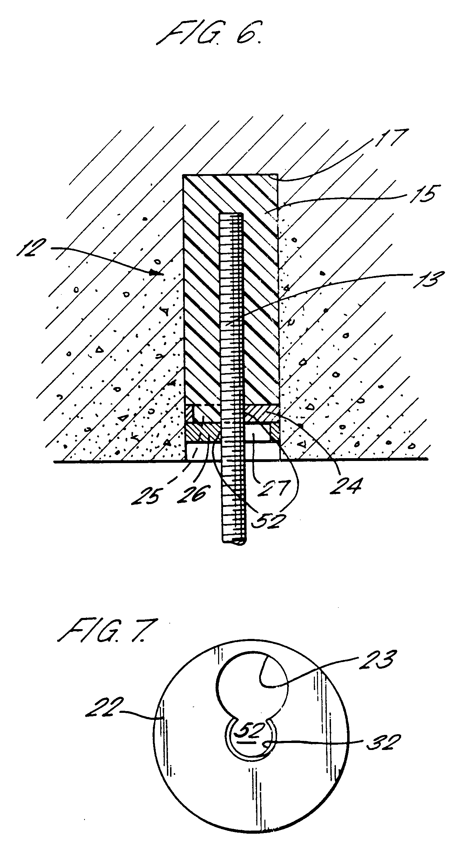

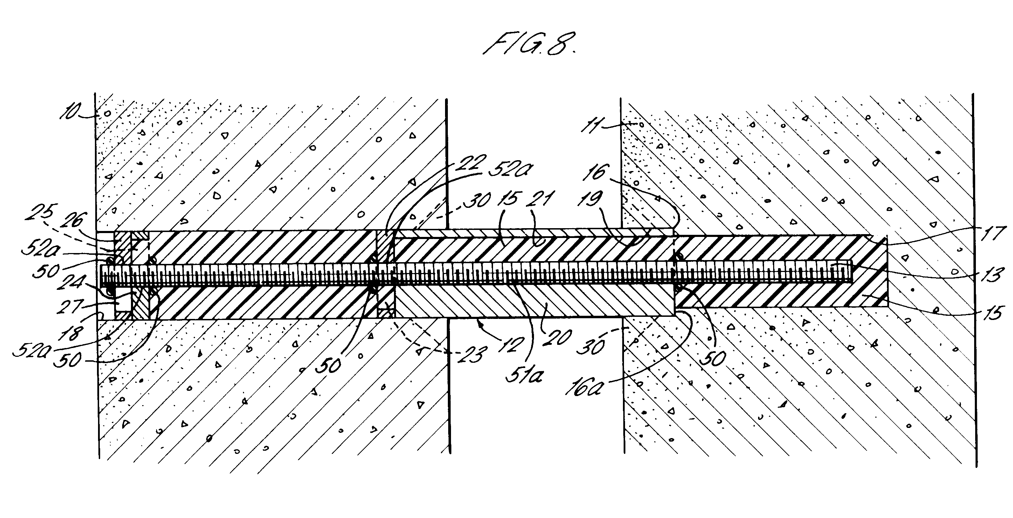

Also positioned on the rod 13 adjacent one end of the sleeve 20 is a washer 22. This is for use when there is to be a two stage fixing process as described below. The washer 22 also has a port 23 which extends axially through its body and which is of the same size as the port 21 of the sleeve 20. The internal coaxial bore 52 of washer 22 also has an internal thread 32 which corresponds with the thread of the rod 13, see Figure 7.

Spaced on the rod 13 from washer 22 are two further washers 24, 26 which are identical to washer 22, having ports 25, 27 extending axially through their bodies. These washers 24, 26 are positioned adjacent each other.

The sleeve and washer ports 21, 23, 25, 27 may be separate from their respective bores 51, 52 or they may overlap as shown in the accompanying drawings.

The sleeve 20 and washers 22, 24, 26 may be formed from any suitable material but are preferably a plastics material such as nylon.

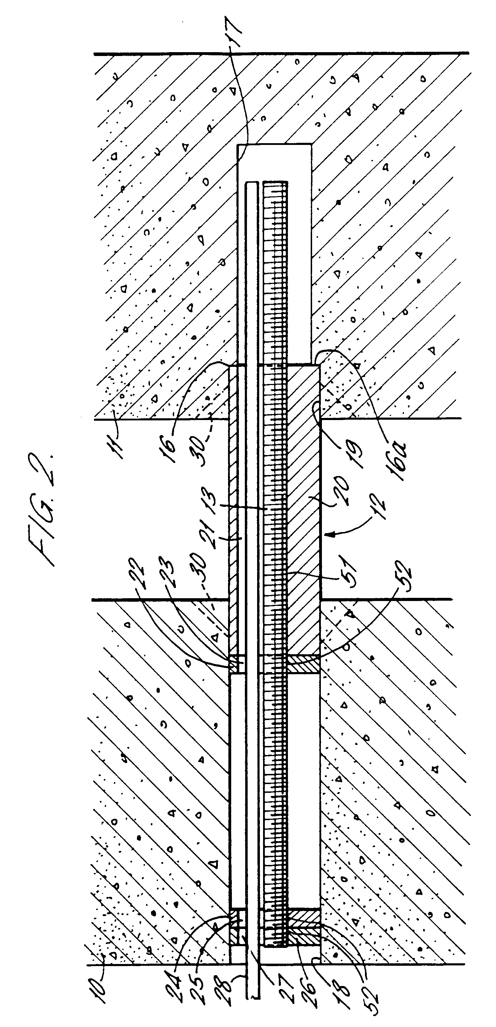

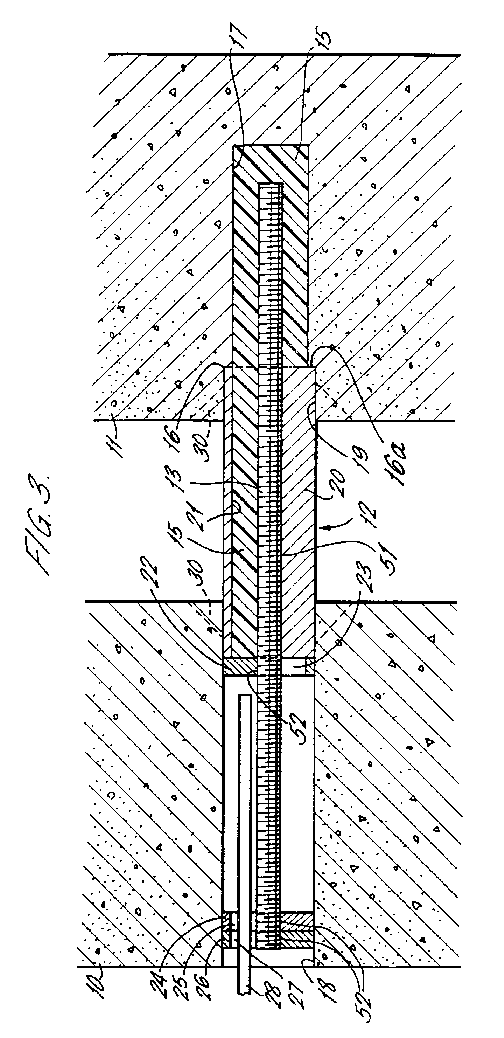

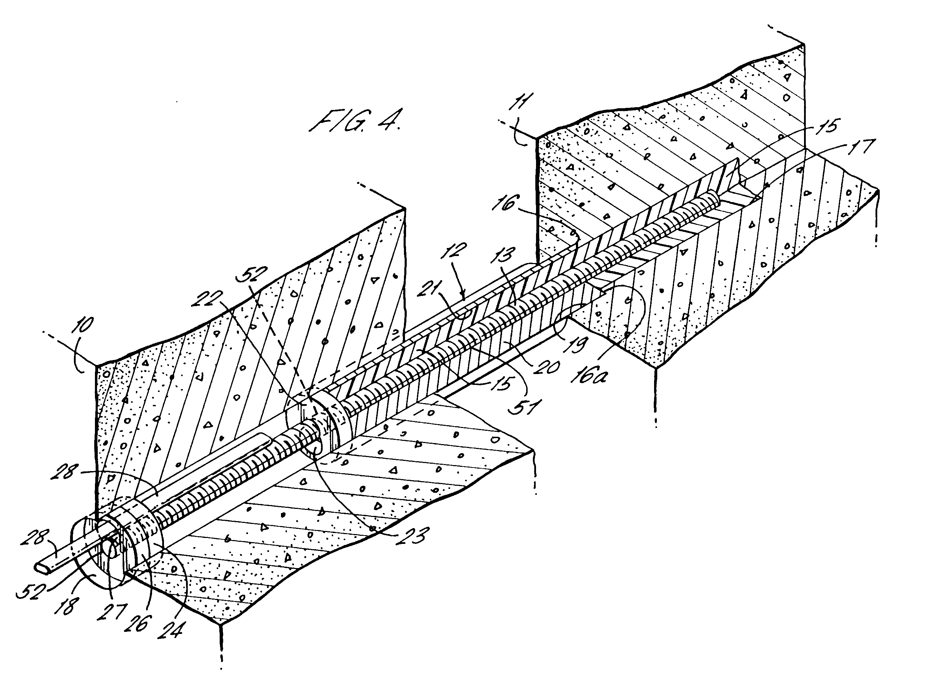

The method of attaching the first and second building components, 10, 11 together will now be described with reference particularly to Figures 2, 3 and 4.

A blind hole 17 is formed in the second building component 11. The hole 17 is drilled with a counterbore 19, which results in a step change in diameter 16. Counterbore 19 has a face 16a. The diameter of the counterbore 19 corresponds to the external diameter of sleeve 20 and has a depth of at least 10mm, but preferably 15mm. The advantage gained in providing a counterbore 19 is that during drilling some of the material 30 of the inner building component 11 will tend to break away, but the counterbore 19 allows the sleeve 20 to pass into the building component 11 and it seats on the face 16a which improves the effective seal between component 11 and sleeve 20 preventing the resin 15 from escaping. The counterbore 19 also facilitates the correct location of the sleeve 20, and therefore the rod 13.

A through-hole 18 is drilled in building component 10, with a diameter corresponding to that of counterbore 19, and may either be drilled in position at the same time as counterbore 19 is formed, or at a position remote from component 11.

The rod 13 is inserted into the blind hole 17 after the sleeve 20 and washers 22, 24 and 26 have been screwed into position along the rod 13 with the sleeve and washer ports 21, 23, 25 and 27 axially aligned. The washers 22, 24, 26 and sleeve 20 are in sealing contact with the walls of through-hole 18 when the rod 13 is in position, and the sleeve 20 spans the cavity gap betwen the building components 10 and 11 with an end of the sleeve 20 remote from washer 22 penetrating the counterbore 19 and resting against step 16 and the opposite end of the sleeve 20 penetrating hole 18 to a depth of about 15mm.

A feeder pipe 28 is inserted through the axially aligned sleeve and washer ports 21, 23, 25 and 27 to the back of blind hole 17 as shown in Figure 2. Resin binder 15 is then introduced into the blind hole 17 from the back and as the hole 17 gradually fills with resin 15 the feeder pipe 28 is gradually withdrawn. The sleeve and washer ports 21, 23, 25 and 27 are of a size and shape such that the feeder pipe 28 can be inserted therein leaving a gap for air to escape from the hole 17, thus ensuring that the hole 17 is effectively filled with resin binder 15.

The feeder pipe 28 is of a size that permits the maximum possible rate of delivery of the resin binder 15 whilst leaving sufficient space between the pipe 28 and the sleeve and washer ports 21, 23, 25 and 27 to ensure that an air gap is present to allow air from the hole 17 to escape as it is displaced by the binder 15.

When the blind hole 17 and sleeve bore 21 have been filled with resin 15 the feeder pipe 28 is withdrawn from hole 17 and sleeve port 21 past washer 22, which is then rotated with respect to the sleeve 20 such that the sleeve port 21 and washer bore 23 are no longer axially aligned. This provides a seal to prevent the binder resin 15 from escaping from blind hole 17 whilst it sets. Once the binder 15 has set it provides a secure fixing for the rod 13 in the blind hole 17. It will be appreciated that the binder 15 may permeate into the material of building component 11 to ensure a good fixing for the rod 13.

The second stage of the fixing is shown in Figure 3. Binder resin 15 is injected via feeder pipe 28 through the aligned ports 25, 27 in washers 24, 26 into the back of the section of through-hole 18 between washers 22 and 24. As this hole is filled with resin 15 the pipe 28 is gradually withdrawn until the end of the pipe 28 reaches and passes washer 26. At this point the washer 26 is rotated with respect to washer 24 so that the washer ports 25, 27 are no longer aligned, thus sealing the end of the through-hole 18, and providing a neat appearance to the external surface of component 10.

If a single stage fixing is required washer 22 may not be required. In such a case, after the binder has been injected into blind hole 17 as described previously and into the sleeve port 21, the injecting process may continue directly into the second stage to fill through-hole 18 until all the available space is filled and then washer 26 is rotated to seal the end of the through-hole 18.

The method described above is illustrated with reference to the fixing of one component to another to form a wall or other vertically extending structure. However, it will be appreciated that the method may equally be used with rod 13 arranged in other orientations, for example diagonal or vertical.

Thus, the method may be used to fix a bracket or other fixing to a horizontal concrete slab, as shown in Figure 6.

In this embodiment, two washers 24, 26 are required as used for the outer seal shown in Figure 1. Once the washer 26 has been rotated with respect to washer 24, the resin binder 15 cannot escape from blind hole 17 whilst it sets. Some leakage back along the sleeve 20 is to be expected during the injecting process for a vertical or diagional fixing, as a gap must be provided to allow the air in hole 17 to escape. Alternatively a short sleeve and a washer, or two short sleeves may be used.

The outer surface of sleeve 20 and washers 22, 24 and 26 may be grooved or threaded along a whole or part of their length, as shown in Figure 5. The threads or grooves 31 assist in achieving tight seals in the holes 17 and 18 and those on sleeve 20 provide a drip barrier between the components 10 and 11.

The invention is not limited to the embodiments described above and further modifications will be apparent.

The advantages of the device described above include the following. The method, by means of the sleeve 20, ensures that if leakage of the binder occurs, the resin can only escape back within the sleeve and the through-hole 18 and not into the cavity between the first and second components. Furthermore this avoids loss of material and prevents contamination of any material filling the cavity between the components by the resin. This also enables the full length of the embedded rod to be bonded to the walls as there is no loss of material, resulting in a firmer, more reliable fixing. Injecting the resin from the back of the holes 17 and 18 ensures that the holes are completely filled and no gaps retained.

A further advantage is that the operator can easily tell when the hole 17 is full as excess resin 15 will discharge via the sleeve 20 and he can avoid continuing to inject resin 15 which would in the prior art fixings overflow into the cavity.

A further modification of the invention lies in the provision of a graduated reservoir to the feeder pipe 28 which allows measured quantities of resin to be injected.

The two step fixing process also allows the possibility of effecting the first part of the fixing, leaving the resin to cure and carrying out pull-off tests before finishing the fixing. When it is deemed unneccesary to adopt the two step fixing process in order to carry out pull-off tests the washer 22 can be dispensed with and the resin injection can proceed as a single process.

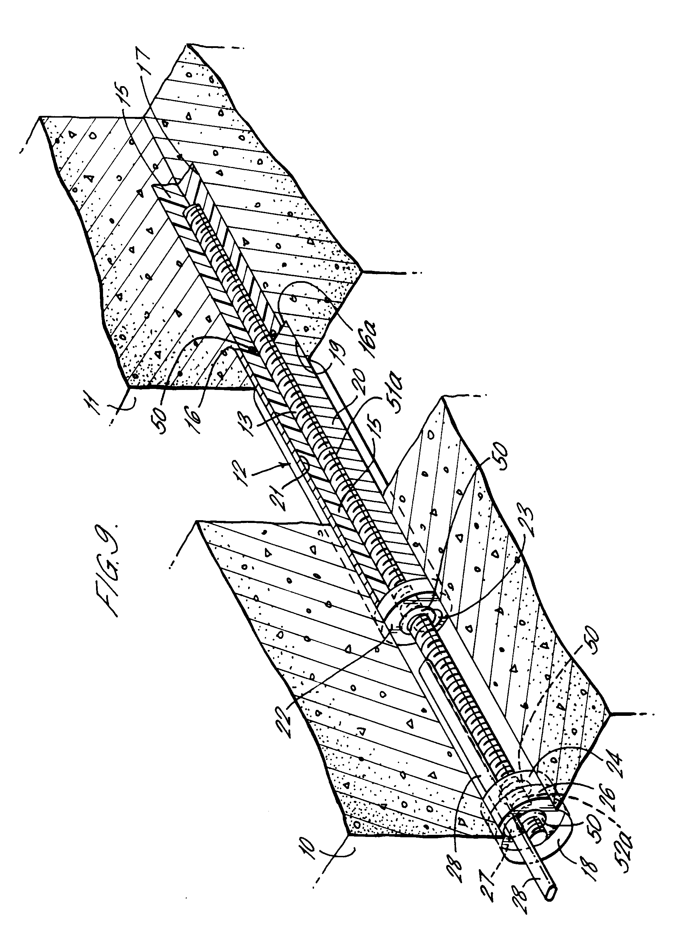

In an alternative embodiment of the invention shown in Figures 8 and 9 the sleeve 20 and washers 22, 24 and 26 are not internally threaded. The sleeve 20 has a co-axial bore 51a which is of a size which allows it to slide on the rod 13. The washers 22, 24 and 26 have co-axial bores 52a which allow them to slide on the rod 13. In this embodiment the washers 22, 24 and 26 and sleeve 20 are held in position on the rod 13 by "O" rings 50, preferably made of rubber, positioned on the rod 13 in sealing contact therewith.

The rod 13 is inserted into the blind hole 17 after the "O" rings 50, the sleeve 20 and washers 22, 24 and 26 have been positioned along rod 13 with the sleeve and washer bores 21, 23, 25 and 27 axially aligned. After the resin 15 is injected into blind hole 17 and through-hole 18 the washers 22 and 26 may be rotated to seal the binder 15 in the respective holes 17 and 18.

Obviously some of the "O" rings 50 and non-threaded sleeve and washers may be used in conjunction with threaded sleeve and/or washer to provide the best combination for the job required, or the easiest method of construction.

Alternatively, when the "O" rings 50 are used the rod 13 may have a surface which is not threaded, but may have some other suitable surface which allows a full shank bond to be achieved between the tie 12 and the building components 10 and 11 via the resin.

In an alternative embodiment of the invention, the sleeve 26 may be held in position on the rod 13 by means of an interference fit between the rod 13 and co-axial bore 51 (or axial as described below). This is preferably by means of a slight taper of the bore 51. Preferably the rod 13 is threaded, but this is not necessary and the bore 51 may be threaded or unthreaded.

In yet another embodiment of the invention the combination of sleeve and 3 washers may be replaced by another suitable combination of sleeves, washers or sleeve(s) and washer(s).

**Claims**

1. A method of fixing a first building component (10) to a second building component (11) comprising the steps of
   a) forming a blind hole (17) in the second component,
   b) positioning sealing means (20, 22) on a rod (13),
   c) inserting the rod into the hole,
   d) inserting a delivery tube (28) through a port (21, 23) in the sealing means,
   e) injecting a binder (15) into the hole around an end portion of the rod to fix the rod in the hole
   f) affixing the first building component to the rod

   characterised by the steps of rotating at least a pair of movable components forming the sealing means relative to each other to axially align ports formed in each of said components to form a passage for insertion of the delivery tube and, after the binder has been injected, effecting a seal by rotating the components relative to each other to cause the ports to move into disalignment.

2. A method of fixing as claimed in claim 1 in which one end of the delivery tube is positioned adjacent a blind end of the hole before the binder (15) is injected.

3. A method as claimed in any of the preceding claims in which one sealing component is a sleeve (20) positioned around the rod (13) and extending between the first and second building components (10, 11), said first building component having a through hole (18) into which an end of the rod remote from that positioned in the blind hole (17) of the second building component projects.

4. A method as claimed in claim 3 in which the first component (10) is fixed to the free end of the rod (13) by injecting binder (15) around the rod into the through-hole (18).

5. A method as claimed in claim 3 or claim 4 in which each end of the sleeve (20) projects at least 10mm into the first and second building components (10, 11).

6. A method as claimed in any one of claims 3, 4 or 5 in which the blind hole (17) in the second building component (11) is counterbored, and one end of said sleeve abuts a face (16a) of the counterbore (19).

7. A method as claimed in any one of the preceding claims wherein the outer surfaces of the sealing means are grooved or threaded (31) along at least a part of their length.

8. A method as claimed in any one of the preceding claims in which the sealing means (20, 22) are positioned on the rod (13) by means of corresponding threads on an external surface of the rod and internal surfaces of the sealing means.

9. A method as claimed in any one of claims 1 to 7 in which the sealing means (20, 22) are positioned on the rod (13) by means of "O" rings (50).

10. A method as claimed in any one of the preceding claims in which a first seal is effected by primary sealing means (20, 22) to prevent binder 15 from leaving the blind hole (17) and a second seal is effected by secondary sealing means (24, 26), which are spaced from the primary sealing means, to prevent binder 15 from leaving a through hole (18) in the second component (11).

11. A fixing for use in the method of claims 1 to 10 comprising a rod (13) and sealing means characterised in that said sealing means comprise at least a pair of sealing components (20, 22) each having a bore (51, 52) and each component having a port (21, 23), said components being movable relative to each other to cause said ports to become axially aligned to allow passage of a delivery tube (28), in which the sealing components are movable to cause said ports to become disaligned to effect a seal.

12. A fixing as claimed in claim 11 in which the sealing components are washers.

13. A fixing as claimed in claim 11 or 13 in which the sealing components are sleeves.

14. A fixing as claimed in any one of claims 11 to 13 in which the sealing components are a combination of one or more sleeves and one or more washers.

15. A fixing as claimed in any one of claims 11 to 14 in which the bores (52) of the sealing components (20, 22) are threaded and the external surface of the rod (13) has a complementary thread.

16. A fixing as claimed in any one of claims 11 to 15 in which the bores (51, 52) of the sealing components (20, 22) are of a size which allows the sealing components to slide on the rod (13) and means (50) are provided for positioning the sealing components on the rod and holding them in position.

17. A fixing as claimed in claim 16 in which the positioning means (50) comprise at least one rubber "O" ring.

18. A fixing as claimed in any one of claims 11 to 17 in which there is an interference fit between the rod (13) and sealing components (20, 22) to hold them in position on the rod.

19. A fixing as claimed in any one of claims 13 to 18 in which the sleeve (20) comprises a plurality of segments (61) on which are formed interconnecting means.

20. A fixing as claimed in claim 19 in which the interconnecting means are corresponding male and female components.

21. A fixing as claimed in claim 19 or claim 20 in which means are provided on the sleeve segments (61) to ensure radial alignment of the segments and to ensure that the ports 63 are aligned.

22. A building structure comprising first and second building components (10, 11) and fixing means connecting the components in which the fixing means comprise a rod (13) located in a blind hole (17) in said second component, sealing means located on the rod comprising a pair of adjacent sealing components each having a port therein, which ports are axially disaligned to form a seal to retain binder (15) surrounding the rod in the hole securing it to the building components, and in which the first building component affixed to the rod.

23. A building structure as claimed in claim 22 in which the rod (13) extends through a through hole in the first component and the sealing means comprise a washer and a sleeve located between the first and second building components and penetrating the building components at both ends.

**Revendications**

1. Procédé de raccordement d'un premier élément de construction (10) à un second élément de construction (11) comprenant les phases consistant à :
   a) former un trou borgne (17) dans le second élément,
   b) positionner des moyens d'étanchéité (20, 22) sur une tige (13),
   c) insérer la tige dans le trou,
   d) insérer un tube de distribution (28) dans un orifice (21, 23) dans les moyens d'étanchéité,
   e) injecter un liant (15) dans le trou autour d'une portion d'extrémité de la tige pour fixer la tige dans le trou,
   f) fixer le premier élément de construction à la tige,
   caractérisé par les phases consistant à faire tourner au moins une paire d'éléments mobiles formant les moyens d'étanchéité l'un par rapport à l'autre pour aligner axialement les orifices ménagés dans chacun desdits éléments pour former un passage pour l'insertion du tube de distribution et, une fois le liant injecté, à réaliser un joint étanche en faisant tourner les éléments l'un par rapport à l'autre pour que leurs orifices ne soient plus alignés.

2. Procédé de raccordement selon la revendication 1, dans lequel une extrémité du tube de distribution est positionnée adjacente à une extrémité borgne du trou avant que le liant (15) soit injecté.

3. Procédé selon l'une quelconque des revendications précédentes, dans lequel un élément d'étanchéité est un manchon (20) positionné autour de la tige (13) et s'étendant entre le premier et le second élément de construction (10, 11), ledit premier élément de construction comportant un trou outre (18) dans lequel une extrémité de la tige éloignée de celle positionnée dans le trou borgne (17) du second élément de construction se projette.

4. Procédé selon la revendication 3, dans lequel le premier élément (10) est fixé à l'extrémité libre de la tige (13) par injection de liant (15) autour de la tige dans le trou outre (18).

5. Procédé selon la revendication 3 ou 4, dans lequel chaque extrémité du manchon (20) se projette sur au moins 10 mm dans le premier et le second élément de construction (10, 11).

6. Procédé selon l'une quelconque des revendications 3, 4 ou 5, dans lequel le trou borgne (17) dans le second élément de construction (11) est un trou à épaulement, et une extrémité dudit manchon bute contre une face (16a) de l'épaulement (19).

7. Procédé selon l'une quelconque des revendications précédentes, dans lequel les surfaces externes des moyens d'étanchéité comportent des cannelures ou filets (31) sur au moins une partie de leur longueur.

8. Procédé selon l'une quelconque des revendications précédentes, dans lequel les moyens d'étanchéité (20, 22) sont positionnés sur la tige (13) au moyen de filets correspondants sur une surface externe de la tige et les surfaces internes des moyens d'étanchéité.

9. Procédé selon l'une quelconque des revendications 1 à 7, dans lequel les moyens d'étanchéité (20, 22) sont positionnés sur la tige (13) au moyen de joints toriques (50).

10. Procédé selon l'une quelconque des revendications précédentes, dans lequel un premier joint est réalisé par des moyens d'étanchéité primaires (20, 22) pour empêcher le liant (15) de sortir du trou borgne (17) et un second joint est réalisé par des moyens d'étanchéité secondaires (24, 26), qui sont espacés des moyens d'étanchéité primaires, pour empêcher le liant (15) de sortir d'un trou outre (18) dans le second élément (11).

11. Raccord pour utilisation dans le procédé des revendications 1 à 10 comprenant une tige (13) et des moyens d'étanchéité, caractérisé en ce que lesdits moyens d'étanchéité comprennent au moins une paire d'éléments d'étanchéité (20, 22) comportant chacun un alésage (51, 52) et chaque élément comportant un orifice (21, 23), lesdits éléments étant mobiles l'un par rapport à l'autre pour amener lesdits orifices à être alignés axialement afin de permettre le passage d'un tube de distribution (28), dans lequel les éléments d'étanchéité peuvent être déplacés pour que lesdits orifices ne soient plus alignés afin de réaliser un joint.

12. Raccord selon la revendication 11, dans lequel les éléments d'étanchéité sont des rondelles.

13. Raccord selon la revendication 11 ou 13, dans lequel les éléments d'étanchéité sont des manchons.

14. Raccord selon l'une quelconque des revendications 11 à 13, dans lequel les éléments d'étanchéité sont une combinaison d'un ou plusieurs manchons et d'une ou plusieurs rondelles.

15. Raccord selon l'une quelconque des revendications 11 à 13, dans lequel les alésages (52) des éléments d'étanchéité (20, 22) sont taraudés et la surface externe de la tige (13) comporte un filet complémentaire.

16. Raccord selon l'une quelconque des revendications 11 à 15, dans lequel les alésages (51, 52) des éléments d'étanchéité (20, 22) ont une dimension qui permet aux éléments d'étanchéité de coulisser sur la tige (13) et des moyens (50) sont prévus pour positionner les éléments d'étanchéité sur la tige et les maintenir en position.

17. Raccord selon la revendication 16, dans lequel les moyens de positionnement (50) comprennent au moins un joint torique en caoutchouc.

**18.** Raccord selon l'une quelconque des revendications 11 à 17, dans lequel est prévu un ajustement serré entre la tige (13) et les éléments d'étanchéité (20, 22) pour maintenir ceux-ci en position sur la tige.

**19.** Raccord selon l'une quelconque des revendications 13 à 18, dans lequel le manchon (20) comprend une pluralité de segments (61) sur lesquels sont formés des moyens d'interconnexion.

**20.** Raccord selon la revendication 19, dans lequel les moyens d'interconnexion sont des éléments mâle et femelle correspondants.

**21.** Raccord selon la revendications 19 ou 20, dans lequel des moyens sont prévus sur les segments (61) de manchon pour garantir un alignement radial des segments et garantir que les orifices (63) sont alignés.

**22.** Structure de bâtiment comprenant un premier et un second élément de construction (10, 11) et des moyens de raccordement reliant les éléments, dans laquelle les moyens de raccordement comprennent une tige (13) située dans un trou borgne (17) dans ledit second élément, des moyens d'étanchéité disposés sur la tige, comprenant une paire d'éléments d'étanchéité adjacents comportant chacun un orifice en leur sein, lesquels orifices ne sont pas alignés axialement de manière à former un joint pour retenir le liant (15) entourant la tige dans le trou le fixant aux éléments de construction, et dans laquelle le premier élément de construction est fixé à la tige.

**23.** Structure de bâtiment selon la revendication 22, dans laquelle la tige (13) s'étend dans un trou outre dans le premier élément et les moyens d'étanchéité comprennent une rondelle et un manchon disposés entre le premier et le second élément de construction et pénétrant dans les éléments de construction aux deux extrémités.

**Patentansprüche**

**1.** Verfahren zur Befestigung eines ersten Gebäudeelements (10) an einem zweiten Gebäudeelement (11) umfassend die Schritte
a) Ausbilden eines Sacklochs (17) in dem zweiten Element,
b) Anordnen von Dichtmitteln (20, 22) auf einer Stange (13),
c) Einführen der Stange in das Loch,
d) Einführen eines Zufuhrrohrs (28) durch eine Öffnung (21, 23) in den Dichtmitteln,
e) Einspritzen eines Binders (15) in das Loch um einen Endabschnitt der Stange herum, um die Stange in dem Loch zu befestigen,
f) Befestigen des ersten Gebäudeelements an der Stange,
**gekennzeichnet durch** die Schritte Verdrehen von wenigstens zwei, die Dichtmittel bildenden, beweglichen Elementen relativ zueinander, um in jedem der Elemente ausgebildete Öffnungen zur Bildung eines Durchgangs zum Einführen des Zufuhrrohrs axial auszurichten, und nach Einspritzen des Binders Bewirken einer Abdichtung durch Verdrehen der Elemente relativ zueinander, um eine Bewegung der Öffnungen außer Ausrichtung hervorzurufen.

**2.** Befestigungsverfahren nach Anspruch 1, bei dem ein Ende des Zufuhrrohrs nahe einem Sackende des Lochs angeordnet wird, bevor der Binder (15) eingespritzt wird.

**3.** Verfahren nach einem der vorhergehenden Ansprüche, bei dem ein Dichtungselement eine Hülse (20) ist, die um die Stange (13) angeordnet ist und sich zwischen den ersten und zweiten Gebäudeelementen (10, 11) erstreckt, wobei das erste Gebäudeelement ein Durchgangsloch (18) aufweist, in welches ein Ende der Stange vorsteht, das von jenem in dem Sackloch (17) des zweiten Gebäudeelements angeordneten entfernt ist.

**4.** Verfahren nach Anspruch 3, bei dem das erste Element (10) an dem freien Ende der Stange (13) durch Einspritzen von Binder (15) in das Durchgangsloch (18) um die Stange herum befestigt wird.

**5.** Verfahren nach Anspruch 3 oder Anspruch 4, bei dem jedes Ende der Hülse (20) mindestens 10 mm in die ersten und zweiten Gebäudeelemente (10, 11) vorsteht.

**6.** Verfahren nach einem der Ansprüche 3, 4 oder 5, bei dem das Sackloch (17) in dem zweiten Gebäudeelement (11) angesenkt wird, und ein Ende der Hülse an eine Fläche (16a) der Ansenkung (19) anstößt.

**7.** Verfahren nach einem der vorhergehenden Ansprüche, bei welchem die äußeren Oberflächen der Dichtmittel entlang wenigstens eines Teils ihrer Länge mit Nuten oder Gewinde (31) versehen sind.

8. Verfahren nach einem der vorhergehenden Ansprüche, bei dem die Dichtmittel (20, 22) auf der Stange (13) mittels entsprechender Gewinde auf einer äußeren Oberfläche der Stange und inneren Oberflächen der Dichtmittel angeordnet werden.

9. Verfahren nach einem der Ansprüche 1 bis 7, bei dem die Dichtmittel (20, 22) auf der Stange (13) mittels "O"-Ringen (50) angeordnet werden.

10. Verfahren nach einem der vorhergehenden Ansprüche, bei dem eine erste Abdichtung durch erste Dichtmittel (20, 22) erzielt wird, um Binder (15) am Austreten aus dem Sackloch (17) zu hindern, und eine zweite Abdichtung durch zweite Dichtmittel (24, 26) erzielt wird, die von den ersten Dichtmitteln mit Abstand angeordnet werden, um Binder (15) am Austreten aus einem Durchgangsloch (18) in dem zweiten Element (11) zu hindern.

11. Befestigung zur Verwendung bei dem Verfahren nach den Ansprüchen 1 bis 10, umfassend eine Stange (13) und Dichtmittel, **dadurch gekennzeichnet,** daß die Dichtmittel wenigstens zwei Dichtungselemente (20, 22) umfassen, die je eine Bohrung (51, 52) aufweisen und jedes Element eine Öffnung (21, 23) aufweist, wobei die Elemente relativ zueinander bewegbar sind, um zur Ermöglichung des Durchgangs eines Zufuhrrohrs (28) eine axiale Ausrichtung der Öffnungen zu bewirken, wobei die Dichtungselemente bewegbar sind, um zur Erzielung einer Abdichtung eine Anordnung der Öffnungen außer Ausrichtung zu bewirken.

12. Befestigung nach Anspruch 11, bei der die Dichtungselemente Unterlegscheiben sind.

13. Befestigung nach Anspruch 11 oder 12, bei der die Dichtungselemente Hülsen sind.

14. Befestigung nach einem der Ansprüche 11 bis 13, bei der die Dichtungselemente eine Kombination aus einer oder mehreren Hülsen und einer oder mehreren Unterlegscheiben sind.

15. Befestigung nach einem der Ansprüche 11 bis 14, bei der die Bohrungen (52) der Dichtungselemente (20, 22) mit Gewinde versehen sind und die äußere Oberfläche der Stange (13) ein komplementäres Gewinde aufweist.

16. Befestigung nach einem der Ansprüche 11 bis 15, bei der die Bohrungen (51, 52) der Dichtungselemente (20, 22) von einer Größe sind, die es den Dichtungselementen erlaubt, auf der Stange (13) zu gleiten, und Mittel (50) vorgesehen sind, um die Dichtungselemente auf der Stange (13) anzuordnen und sie in Position zu halten.

17. Befestigung nach Anspruch 16, bei der die Positioniermittel (50) wenigstens einen Gummi-"O"-Ring umfassen.

18. Befestigung nach einem der Ansprüche 11 bis 17, bei der einen Preßsitz zwischen der Stange (13) und Dichtungselementen (20, 22) vorhanden ist, um sie auf der Stange in Position zu halten.

19. Befestigung nach einem der Ansprüche 13 bis 18, bei der die Hülse (20) eine Mehrzahl von Segmenten (61) umfaßt, auf denen Verbindungsmittel ausgebildet sind.

20. Befestigung nach Anspruch 19, bei der die Verbindungsmittel entsprechende männliche und weibliche Elemente sind.

21. Befestigung nach Anspruch 19 oder 20, bei der Mittel auf den Hülsensegmenten (61) vorgesehen sind, um radiale Ausrichtung der Segmente sicherzustellen und um sicherzustellen, daß die Öffnungen (63) ausgerichtet sind.

22. Gebäudeanordnung umfassend erste und zweite Gebäudeelemente (10, 11) und Befestigungsmittel, die die Elemente verbinden, wobei die Befestigungsmittel eine Stange (13) umfassen, die in einem Sackloch (17) in dem zweiten Element angeordnet ist, auf der Stange angeordnete Dichtmittel, die zwei benachbarte Dichtungselemente mit jeweils einer Öffnung darin umfassen, welche Öffnungen außer axialer Ausrichtung sind, um eine Dichtung zu bilden, die Binder (15) zurückhält, der die Stange in dem Loch umgibt und ihn an den Gebäudeelementen befestigt, und bei der das erste Gebäudeelement an dem Stab befestigt wird.

23. Gebäudeanordnung nach Anspruch 22, bei der sich die Stange (13) durch ein Durchgangsloch in dem ersten Gebäudeelement erstreckt, und die Dichtmittel eine Unterlegscheibe und eine Hülse umfassen, die zwischen dem ersten und zweiten Gebäudeelement angeordnet ist und an beiden Enden in die Gebäudeelemente eindringt.

FIG. 1.

EP 0 316 199 B1

FIG. 2.

FIG. 3.

EP 0 316 199 B1

FIG. 4.

FIG.5.

EP 0 316 199 B1

FIG. 6.

FIG. 7.

FIG.8.

EP 0 316 199 B1

FIG.9.